## Europäisches Patentamt
## European Patent Office
## Office européen des brevets

(19)

(11) Veröffentlichungsnummer: **0 048 861**
**B1**

(12)

# EUROPÄISCHE PATENTSCHRIFT

(45) Veröffentlichungstag der Patentschrift:
**27.12.85**

(51) Int. Cl.⁴: **H 04 Q 7/04**

(21) Anmeldenummer: **81107150.5**

(22) Anmeldetag: **10.09.81**

(54) Universelles Mobilfunk-Digitalnetz zur paketvermittelten Datenübertragung.

(30) Priorität: **29.09.80 DE 3036707**

(43) Veröffentlichungstag der Anmeldung:
**07.04.82 Patentblatt 82/14**

(45) Bekanntmachung des Hinweises auf die Patenterteilung:
**27.12.85 Patentblatt 85/52**

(84) Benannte Vertragsstaaten:
**BE FR GB IT NL SE**

(56) Entgegenhaltungen:
DE - A - 2 441 099
DE - A - 2 522 759
DE - A - 2 659 635
FR - A - 2 362 546
US - A - 3 749 845

**INTERNATIONAL CONFERENCE ON
COMMUNICATIONS, 8-12 Juni 1980 Seattle, US
SPILLING et al.: "Digital voice communications in the
packet radio network", Seiten 21.4.1 - 21.4.7
IEEE TRANSACTIONS ON COMMUNICATIONS Band
COM-28, Nr. 9, September 1980 New York, US MOWAFI
et al.: "Integrated Voice/Data Packet Switching
Techniques for Future Military Networks", Seiten
1655-1662
COLLOQUE INTERNATIONAL DE COMMUTATION,**

(73) Patentinhaber: **Siemens Aktiengesellschaft, Berlin und
München Wittelsbacherplatz 2, D-8000 München 2 (DE)**

(72) Erfinder: **Vollmeyer, Werner, Dr., Wertheimer
Strasse 112, D-8000 München 60 (DE)**

(56) Entgegenhaltungen: (Fortsetzung)
**Paris 7-11 Mai 1979 Paris, FR IKEDA et al.: "Système de
commutation de circuits virtuels: un nouveau concept
pour les réseaux numériques à services intégrés"
Seiten 757-764**

**Beschreibung**

Die vorliegende Erfindung betrifft ein universelles Mobilfunk-Digitalnetz zur paketvermittelten Informationsübertragung, bei dem jeder mobile Teilnehmer jeweils über zumindest eine Funkverbindung mit einem ortsgebundenen Funkkonzentrator verbindbar ist, bei dem eine von einem mobilen Ursprungsendgerät in das universelle Mobilfunk-Digitalnetz eingegebene Verbindungsinitiierung dazu verwendet wird, eine virtuelle Ursprungsverbindung zwischen dem mobilen Ursprungsendgerät und dem ihm aktuell zugeteilten Funkkonzentrator aufzubauen, bei dem eine von dem mobilen Ursprungsendgerät in das universelle Mobilfunk-Digitalnetz eingegebene Wählinformation dazu verwendet wird, virtuelle Teilverbindungen und eine virtuelle Zielverbindung zwischen einem mobilen Zielendgerät und einem ihm aktuell zugeteilten weiteren, ggf. auch demselben Funkkonzentrator aufzubauen, und bei dem zu übertragende Information in Informationsabschnitte mit variablen, vom Übertragungsverfahren und vom Vermittelungsverfahren nicht begrenzten Längen eingeteilt wird.

Unter der Voraussetzung, daß Sprachsignale in einem Fernsprechsystem digitalisiert werden, kann eine Übertragung solcher digitalisierter Sprachsignale einer digitalen On-Line-Datenübertragung gleichgesetzt werden.

In bisher bekannten Fernsprech-Mobilfunksystemen werden unter der Voraussetzung eines echten Gegensprechbetriebes in aller Regel für jede Verbindung jeweils zwei Kanäle, nämlich ein Hin- und ein Rückkanal benötigt. Mit zunehmender Verdichtung solcher betreffenden Netze bzw. mit zunehmender Teilnehmerzahl wachsen die Schwierigkeiten bezüglich der Anzahl der verfügbaren Funkkanäle.

Es ist bekannt, daß eine Sprechverbindung für ein einzelnes Gespräch in aller Regel über die Zeit nur zu einem geringen Teil ausgenutzt wird, da zum einen die Gesprächspartner jeweils abwechselnd sprechen und zum anderen auch der Redefluß des einzelnen Partners nicht kontinuierlich verläuft. Es entstehen jeweils auch in einem Kurzmonolog Sprechpausen, während derer die betreffende Sprechverbindung tatsächlich nicht benötigt würde. Dieser Umstand wird bekanntlich durch Verfahren zur Einsparung von Kanalkapazität, insbesondere in kostenintensiven Verbindungsabschnitten, beispielsweise Transatlantikkabeln, Satellitenstrecken od. ä., vorteilhaft ausgenutzt. Ein diesbezüglich bekanntes und bewährtes Verfahren stellt das TASI (time assigned speech interpolation)-Verfahren dar.

Bei der Sprachinterpolation, die bei diesem bekannten TASI-Verfahren vorgenommen wird, wird jeweils ein Kanal für eine betreffende Sprechverbindung durchgeschaltet, wenn in der jeweils betreffenden Richtung tatsächlich gesprochen wird. In allen anderen Zeitabschnitten steht die Kanalkapazität weiteren individuellen Sprechverbindungen zur Verfügung. Es ist ohne weiteres erkennbar, daß mittels eines solchen Verfahrens der Umstand, daß eine herkömmliche Sprechverbindung nach den erläuterten Gegebenheiten während eines Gespräches nur zeitabschnittsweise benötigt wird, vorteilhaft für eine bessere Ausnutzung der Kanäle verwendet werden kann. Mit der Sprachinterpolation kann die vorhandene Übertragungskapazität eines Leitungsbündels sehr viel besser ausgenutzt werden. Es ist z. B. möglich, ein Bündel von 35 oder mehr Leitungen mit etwa doppelt so vielen Gesprächen, als herkömmlicherweise möglich ist, zu belasten.

Die bekannten Verfahren der Sprachinterpolation werden grundsätzlich abschnittsweise, beispielsweise zwischen zwei Vermittlungsstellen eingesetzt. Jede der beiden Vermittlungsstellen hat dabei ein Bündel von gehenden Kanälen zur Verfügung, aus dem sie die Kanäle den Nachrichtensendern nach Bedarf zuteilt. In einem vollständigen Fernsprechnetz liegt dagegen ein sternförmiges oder sogar vermaschtes Netz vor, und eine Verbindung besteht in aller Regel aus mehreren Abschnitten. Wegen der erforderlichen Zwischenspeicherzeit ergäbe sich jedoch bei mehreren Abschnitten (bis zu 12) eine viel zu große Laufzeit. Dies würde somit zu keiner realistischen Lösung führen können.

Aus der Druckschrift COLLOQUE INTERNATIONAL DE COMMUTATION, Paris, 7. bis 11. Mai 1979, S. 757 bis 764, ist es bei einem System zur Übertragung digitalisierter Sprachen- und Digitaldaten mit virtuellem Verbindungsaufbau bekannt, einen Sprachdetektor zur Erkennung von Sprachpausen zu benutzen. Außerdem ist es aus dieser Druckschrift bekannt, die in Informationsabschnitte unterteilte zu übertragende Information an ein vorbestimmtes, in Rasterabschnitte unterteiltes Zeitraster anzupassen und Aufbaudatenfolgen zum Aufbau realer Verbindungen mit einem Sicherungsbit, beispielsweise einem Paritätsbit, zu versehen.

Bekannt sind ferner Netze mit einer sog. Paketvermittlung, vergl. beispielsweise INTERNATIONAL CONFERENCE ON COMMUNICATIONS, 8.—12. Juni 1980, Seattle USA, SPILLING et al: »Digital voice communications in the pakket radio network«, S. 21.4.1—21.4.7. Diese Netze haben für die Sprachübertragung folgende Nachteile:

— Die abschnittweise Übertragung der »Pakete« erfordert in jedem Knoten eine Zwischenspeicherung eines ganzen Blockes, weil durch Sicherungsverfahren abschnittsweise die richtige Übertragung des Blockes sichergestellt wird. Es ist jedoch darauf zu achten, daß die Laufzeitobergrenze von Teilnehmer zu Teilnehmer, die mit 400 ms festgelegt ist, nicht überschritten wird. Zieht man in Betracht, daß ein Abschnitt, der über eine Erde-Satelliten-Strecke verläuft, bereits 300 ms beansprucht, so verbleiben für die restlichen Abschnitte nur noch ca. 100 ms. Dieser Umstand ist insbesondere für weltweite Sprechverbindungen von besonderer Bedeutung.

In Netzen mit Paketvermittlung ist daher die Laufzeitobergrenze nicht immer einzuhalten.

— Ferner ist die Übertragung in jedem Leitungsabschnitt abhängig von dem Verkehr, der neben der Sprachübertragung fließt. Die am Anfang einer Leitung zur Übertragung anstehenden Pakete können nur nacheinander übertragen werden. Ist momentan ein großer Verkehr zu bewältigen, so müssen die Pakete länger warten, als wenn momentan wenig Verkehr zu bewältigen ist. Die Laufzeit der Pakete zwischen den Teilnehmern ist daher von Paket zu Paket unterschiedlich. Durch die dadurch verursachten Laufzeitsprünge ergeben sich zusätzliche Geräusche und Unregelmäßigkeiten in der Sprachwiedergabe.

Aus der DE-A-2 659 635 ist ein Verfahren zur digitalen Informationsübertragung für bewegliche Teilnehmerstationen im Großraum eines Funknetzes, das aus mehreren Funkkonzentratoren in einer gegenseitigen räumlichen Anordnung nach Art eines Cellularsystems mit sich überlappenden Funkbereichen besteht und das einen Frequenzverteilungsplan für die Funkkonzentratoren aufweist, der Gleichkanalstörungen im jeweiligen Funkbereich einschließlich einer erweiterten Randzone weitgehend ausschließt, bekannt, das dadurch gekennzeichnet ist, daß der funkorganisationsbezogene Informationsaustausch zwischen den Teilnehmerstationen und den mit einer übergeordneten Taktsynchronisation arbeitenden Funkkonzentratoren in den Funkbereichen im wesentlichen über zentrale Organisationskanäle vorgenommen wird, daß ferner hierzu in den Organisationskanälen von den Funkkonzentratoren zu den funkbereichsmäßig erfaßbaren Teilnehmerstationen periodisch Informationsblöcke mit der Funkbereichskennung ausgesendet werden, an die sich zeitgestaffelte weitere funkorganisationsbezogene Informationen anschließen und daß die Teilnehmerstationen, soweit sie aktiviert sind, die Organisationskanäle abhören, sich aus ihrer eigenen funktechnischen Situation heraus, unter Berücksichtigung der funkbereichsbezogenen Verkehrsbelastung des Netzes, entscheiden, welchem der Funkbereiche sie sich zuordnen bzw. wenn sie einen Funkbereichswechsel vollziehen wollen und den Vollzug dieser Entscheidungen dann im Dialog mit den Funkkonzentratoren über die Organisationskanäle herbeiführen.

Schließlich ist aus der US-A-3 749 845 ein Digitaldatenübertragungssystem mit einer Vielzahl von miteinander verbundenen Vermittlungsstellen bekannt, das nur dann wirkliche Verbindungswege aufbaut, wenn eine anfordernde Einrichtung Daten zu übermitteln hat. Dadurch wird erreicht, daß die betreffenden Einrichtungen nicht durch in den Pausen zwischen den Datenfolgen miteinander verbunden sein müssen.

Der vorliegenden Erfindung liegt die Aufgabe zugrunde, ein universelles Mobilfunk-Digitalnetz zur Sprach- und Datenübertragung zu schaffen, bei dem digitale, nicht sprachbezogene Daten und/oder Sprache gleichartig übertragen werden, bei dem die Nachteile der Netze mit Paketvermittlung vermieden werden und bei dem es mit verhältnismäßig einfachen Mitteln bzw. Maßnahmen erreicht werden kann, dennoch die Vorteile der Sprachinterpolation zu nutzen und damit Kanalkapazität zu sparen.

Die der Erfindung zugrunde liegende Aufgabe wird bei einem universellen Mobilfunk-Digitalnetz gemäß dem Oberbegriff der Patentansprüche 1 oder 3 durch die in dem jeweiligen kennzeichnenden Teil dieser Patentansprüche angegebenen Merkmale gelöst.

Die Anwendung des erfindungsgemäßen Prinzips bei einem Fernsprechvermittlungsnetz oder bei einem Fernsprech-Mobilfunksystem oder bei einem universellen Digitalnetz ist Gegenstand der prioritätsgleichen europäischen Patentanmeldungen 0 048 853 bzw. 0 048 854 bzw. 0 048 860.

Das erfindungsgemäße universelle Mobilfunk-Digitalnetz bietet den Vorteil, daß die zur Verfügung stehenden Kanäle besser ausgenutzt werden können und damit die Teilnehmerzahl gegenüber bekannten Systemen beträchtlich gesteigert werden kann.

Vorteilhafte Weiterbildungen der vorliegenden Erfindung sind durch die in den Unteransprüchen angegebenen Merkmale gekennzeichnet.

Im folgenden wird das universelle Mobilfunk-Digitalnetz gemäß der vorliegenden Erfindung anhand mehrerer Ausführungsbeispiele für die Erfindung betreffender Figuren im einzelnen beschrieben.

Fig. 1 zeigt verschiedene Verbindungs-Aufbaumöglichkeiten für eine Datenverbindung zwischen zwei mobilen Endgeräten, die jeweils über Funkverbindungen an einen Funkkonzentrator angeschlossen sind.

Fig. 2 zeigt eine Verbindungs-Aufbaumöglichkeit für eine Datenverbindung zwischen einem ortsfesten Endgerät und einem an einen über Funkverbindungen an einen Funkkonzentrator angeschlossenen mobilen Endgerät.

Fig. 3 zeigt schematisch den Aufbau einer ersten Aufbaudatenfolge D'.

Fig. 4 zeigt schematisch den Aufbau einer zweiten Aufbaudatenfolge D''.

Fig. 5 zeigt schematisch den Aufbau einer Sprachinformation S mit einzelnen Phrasen P mit jeweils einer vorangestellten Zielkennungsfolge Z und einer anschließenden Endekennung E.

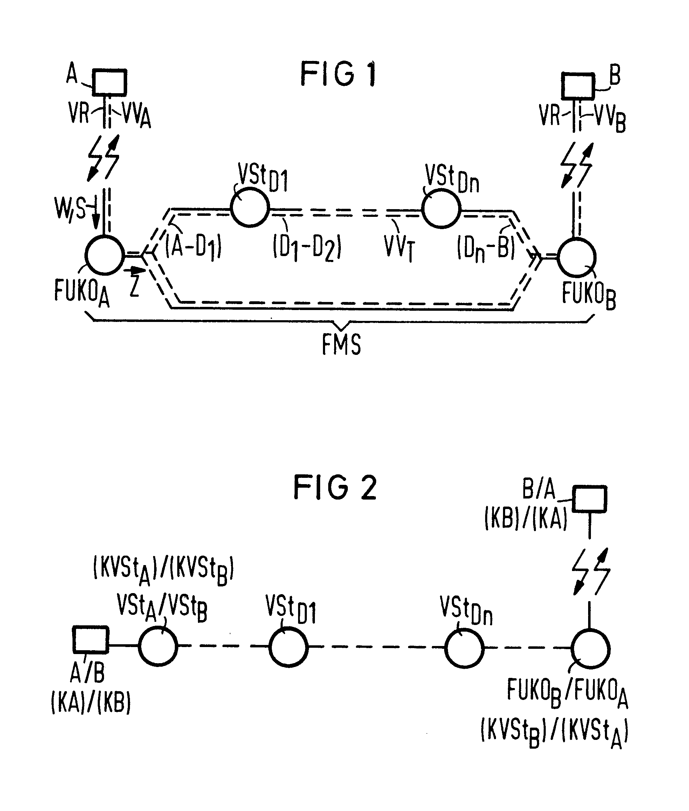

Wie bereits erläutert, zeigt Fig. 1 verschiedene Verbindungs-Aufbaumöglichkeiten für eine Datenverbindung zwischen zwei mobilen Endgeräten. Dabei wird vorausgesetzt, daß die beiden Übertragungsrichtungen voneinander völlig unabhängig geschaltet werden können. Diese Voraussetzung ist deswegen nötig, weil sowohl bei der Datenübertragung als auch bei der Sprachübertragung Zeitabschnitte auftreten, in denen beide Endgeräte senden. Dann müssen auch Sender und Empfänger gleichzeitig eingeschaltet sein.

Es sei angenommen, daß der in einem Bereich zentral gelegenen festen Funkstelle, nämlich dem Funkkonzentrator FUKO$_A$ bzw. FUKO$_B$, 60 Kanäle in Richtung zu den mobilen Endgeräten für eine Datenübertragung zur Verfügung stehen. Ebenso sei angenommen, daß ebenfalls 60 Kanäle in umgekehrter Richtung sowie je ein Steuerkanal in den beiden Richtungen zur Verfügung stehen. Jeder Kanal soll eine Übertragungsgeschwindigkeit von 16 kbit/s aufweisen. Der betreffende Funkkonzentrator kann dann 120 virtuelle Verbindungen annehmen. Jeder weitere Verbindungswunsch wird durch ein Besetztzeichen abgewiesen.

Die Datenübertragung in Richtung zum mobilen Endgerät steuert der Funkkonzentrator über einen speziellen Steuerkanal in Richtung zu den mobilen Endgeräten, der nicht identisch mit einem Organisationskanal ist, der dem Verbindungsauf- und -abbau dient.

Beim Aufbau einer Verbindung über den Organisationskanal ordnet der betreffende Funkkonzentrator der Verbindung eine Nummer zu, die nur für die Dauer der Verbindung und nur für diesen Funkkonzentrator gilt. Da der Funkkonzentrator je Steuerkreis nur 120 Verbindungen annehmen kann, sind dazu 7 bit ausreichend. Zusammen mit 1 bit für eine Paritätssicherung ergibt sich gerade 1 Oktett.

Die 60 Kanäle des Funkkonzentrators sind ebenfalls numeriert. Mit einem Bit ist zu kennzeichnen, welche Richtung der Kanal hat. Hier wird angenommen, daß für diejenigen Kanäle in Richtung zum Endgerät an der ersten Stelle eines Oktetts der Binärwert 1 verwendet wird. Für die Kennzeichnung der 60 Kanäle sind 6 bit ausreichend. Das achte Bit des Oktetts dient der Paritätssicherung.

Der Funkkonzentrator ist also in der Lage, mit zwei Oktetts im Steuerkanal in Richtung zum mobilen Endgerät jeder der maximal 120 Verbindungen einen der 2 × 60 Kanäle zuzuordnen.

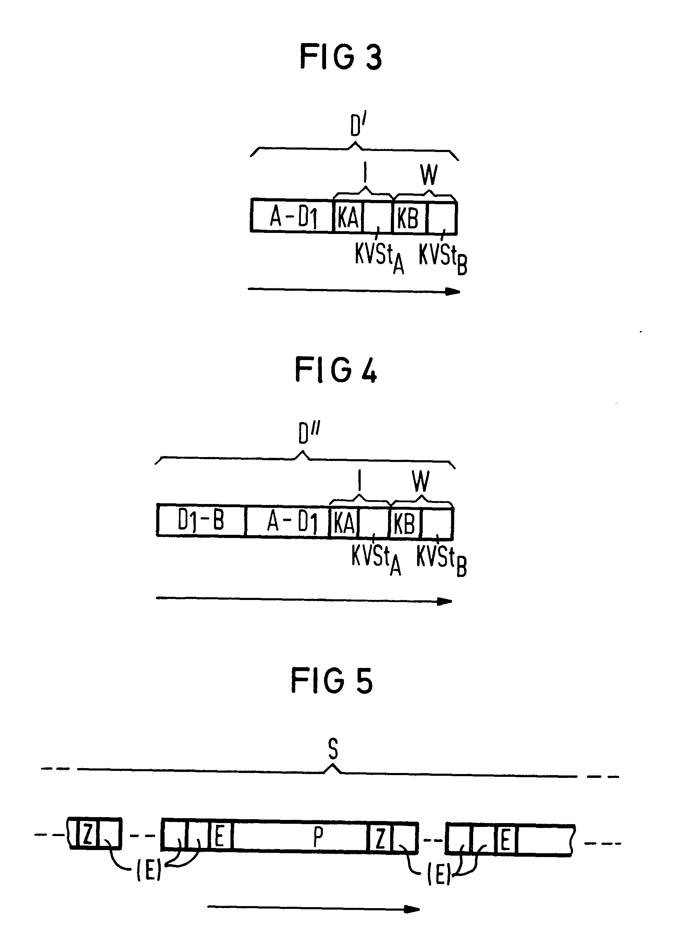

Wenn der Funkkonzentrator nun aus dem Fernsprech-Landnetz während eines Gesprächs zu einem mobilen Teilnehmer Sprache zu übermitteln hat, vgl. Fig. 2, so unterteilt er die Sprache mit einem Sprachdetektor in Phrasen. (Eine Phrase ist ein zusammenhängender Sprachabschnitt.) Jede Phrase wird 15 ms zwischengespeichert, um am Anfang einer Phrase feststellen zu können, ob es sich wirklich um Sprache oder nur um einen kurzen Störknack handelt. Diese Zeit wird benutzt, um der betreffenden Empfangseinrichtung beim Teilnehmer über den Steuerkanal mitzuteilen, daß eine neue Phrase übermittelt werden wird und über welchen Kanal dies geschehen soll. In diesem Fall übermittelt der Funkkonzentrator, im folgenden jeweils kurz »FUKO« genannt, zuerst die Nummer der Verbindung und mit dem nächsten Oktett die Kanalnummer. Der Empfänger des Mobilteilnehmers stellt sich nach Empfang der 2 Steuer-Oktetts innerhalb von etwa 3 ms auf den genannten Kanal ein und empfängt die Phrase, die 15 ms nach Eintreffen beim FUKO weitergesendet wird.

In den Sprechkanälen werden im Ruhezustand Oktetts der Form 11111111 übertragen. Der Beginn einer Phrase wird durch ein Oktett der Form 00000000 angezeigt. Empfängt der Empfänger die Kombination 00000000, so decodiert er das folgende Oktett als Sprache.

Auf das Phrasenbeginn-Oktett 00000000 kann gemäß einer vorteilhaften Weiterbildung der Erfindung verzichtet werden, wenn sichergestellt wird, daß das erste Oktett, das Sprache darstellt, von Oktetts der Formen 11111111, 01101000 und 01111110 verschieden ist oder vom Sender verschieden gemacht wird und der Empfänger dies auswertet. Diese Oktetts stellen jeweils systemintern vergebene Kennzeichen dar.

Es ist wichtig, daß die Durchlaufzeit der Sprache durch den FUKO immer gleich ist. Während der Zwischenspeicherzeit sucht der FUKO für die aktuelle beginnende Phrase einen freien Kanal. In der Regel wird dieser Suchvorgang zur Zuteilung eines Kanals führen. Nach Ablauf der Zwischenspeicherzeit ist der Empfänger beim Mobilteilnehmer auf diesen Kanal eingestellt und kann die Phrase empfangen. Ist jedoch zufällig kein Kanal frei, so darf die Phrase nicht zusätzlich verzögert werden. Vielmehr werden am Anfang der Phrase so viele Oktetts unterdrückt, wie der Dauer entspricht, in der die Phrase auf einen freien Kanal warten muß. Wenn der Sprachdetektor beim FUKO anzeigt, daß die Phrase beendet ist, werden 16 Oktetts der Form 11111111 ausgesendet. Sollte das analoge Sprachsignal während einer Phrase die Aussendung von 16 Oktetts der Form 11111111 erfordern, wodurch ein Phrasenende vorgetäuscht würde, so kann festgelegt werden, daß der FUKO beim sechzehnten Oktett das Bit mit der geringsten Wertigkeit von 1 auf 0 verändert. Es besteht jedoch nur eine geringe Wahrscheinlichkeit, daß das analoge Sprachsignal die Aussendung von 16 Oktetts der Form 11111111 erfordert, weshalb man auf diese Maßnahme vorteilhafterweise verzichten kann.

Wie im folgenden erläutert werden wird, muß der Empfänger der mobilen Station nicht nur prüfen, ob 16 Oktetts der Form 11111111 eintreffen, um davon abzuleiten, daß die Phrase beendet ist. Er muß vielmehr außerdem prüfen, ob das darauf folgende Oktett nicht die Form 01101000 hat.

Nach Beendigung der Phrase stellt sich der Funkempfänger wieder auf den Steuerkanal ein.

Im Steuerkanal in Richtung zu den Mobilteilnehmern werden im Ruhezustand Synchronisierzeichen übermittelt, z. B. Oktetts der Form 01101000. Diese Kombination wird weder bei der Numerierung der virtuellen Verbindung noch bei der Numerierung der Kanäle verwendet. Die Steuerempfänger aller mobilen Teilnehmer synchronisieren die Molbilteilnehmerstationen auf diesen Takt. Zur Trennung zweier aufeinanderfolgender Phrasenbeginnblöcke wird jeweils mindestens 1 Oktett der Form 01101000 eingefügt.

Wenn angenommen wird, daß 120 Verbindungen aufgebaut worden sind und dabei in jeder Richtung innerhalb von 2 s im Mittel eine Phrase und eine Pause übertragen werden müssen, ist der Steuerkanal durch die Phrasen in Richtung zu den Mobilteilnehmern mit

$$\frac{120}{2[s]} \cdot \frac{3 \cdot 8\,[bit]}{16\,000\,[bit/s]} = 0{,}09\,[Erl]$$

belegt.

Bei der Sprachübertragung von Mobilteilnehmern zum FUKO wird ähnlich wie in der Gegenrichtung verfahren. Lediglich die Sprechkanäle werden nicht auf der Sendeseite, sondern von der Empfangsseite, nämlich vom FUKO aus, zugeteilt. Hierdurch unterscheidet sich dieses Verfahren wesentlich von bekannten Verfahren der Sprachinterpolation. Bei Beginn einer Phrase P muß die Teilnehmerstation die Zuteilung eines Kanals in Richtung zum FOKO anfordern. Dazu sendet sie — nach Einschalten des Senders — 3 Oktetts auf dem Steuerkanal zum FUKO, nämlich 2 Oktetts der Form 01101000, sowie die Verbindungsnummer. Anschließend gibt sie den Steuerkanal wieder frei, indem sie den Sender wieder ausschaltet. Der FUKO teilt dem mobilen Endgerät über den Steuerkanal einen Kanal zu, indem er zunächst ein Oktett zur Kennzeichnung der Verbindung und dann ein Oktett zur Kennzeichnung des zugeteilten Kanals aussendet. Bei der Kanalkennzeichnung ist das Bit der ersten Stelle des Oktetts auf 0 gesetzt, um anzuzeigen, daß es sich um einen Kanal der Richtung vom Teilnehmer zum FUKO handelt.

Die Mobilteilnehmerstation stellt nun innerhalb von 3 ms ihren Sender auf den zugeteilten Sprechkanal ein, schaltet den Sender ein, sendet zwei Oktetts der Form 01101000, sodann ein Oktett der Form 00000000 und danach das die Sprache repräsentierende Signal. Unter der Voraussetzung, daß die Verarbeitungszeit eines dafür vorgesehenen Zuteilungsrechners im FUKO 5 ms beträgt, kann der Kanal — auch unter Berücksichtigung der Laufzeiten — innerhalb von 15 ms zur Verfügung stehen.

Zur Beendigung der Phrase sendet die Mobilteilnehmerstation 16 Oktetts der Form 11111111 aus und gibt dann den zugeteilten Sprechkanal wieder frei, indem sie den Sender ausschaltet und vorsorglich wieder auf den Steuerkanal einstellt.

Der Steuerkanal zum FUKO ist unter denselben Bedingungen wie denen, die für die Sprachübertragung in Richtung zu dem mobilen Teilnehmer gelten, durch die Phrasen in Richtung zum FUKO ebenfalls mit ca. 0,1 Erl belegt. Es ist jedoch zu bemerken, daß die Steuerinformationen von den Mobilteilnehmern unkorreliert angeboten werden und daher zeitliche Kollisionen nicht zu vermeiden sind, obwohl die Verkehrsbelastung des Steuerkanals nicht groß ist. Um diesem Problem zu begegnen, sind zwei wirksame Maßnahmen durchführbar:

a) Für den Steuerkanal sollten beim FUKO mindestens vier Sektorempfangsantennen mit vier nachgeschalteten Empfängern verwendet werden. Auf diese Weise können auch gleichzeitig eintreffende Signale aus verschiedenen Richtungen selektiert werden. Andererseits ist durch ein Programm sicherzustellen, daß Signale, die von zwei Empfängern aufgenommen werden, keine Doppelbelegung verursachen.

b) Ein Mobilteilnehmer, dessen Kanalanforderung »überhört« wurde, erkennt dies nach 15 ms, weil er bis zu diesem Zeitpunkt vom FUKO keinen Kanal angeboten bekommt. Er wiederholt daher seine Anforderung und verkürzt den Phrasenanfang, wie zuvor für den Vorgang einer Sprachübertragung in Richtung zu dem mobilen Teilnehmer beschrieben wurde. Dabei sollte die Aussendung der wiederholten Anforderung um 0, 1, 2 oder 3 Oktetts über die 15 ms hinaus verzögert werden, wobei die tatsächliche Verzögerungszeit stochastisch auszuwählen ist. Damit soll vermieden werden, daß zwei Mobilteilnehmer, die bei der ersten Anforderung gleichzeitig gesendet hatten, beim zweiten Mal ebenfalls gleichzeitig senden und sich so wiederum gegenseitig stören.

Der Steuerkanal in Richtung von dem FUKO zum Mobilteilnehmer ist zusätzlich auch mit den Steuersignalen für die Phrasen vom Mobilteilnehmer zum FUKO belegt. Unter denselben Bedingungen wie zuvor beschrieben, beträgt der Zusatzverkehrswert ca. 0,1 Erl, so daß dieser Steuerkanal insgesamt mit ca. 0,2 Erl belegt ist. Da der FUKO die Aussendung der Steuersignale für die beiden Richtungen koordinieren kann, ist diese Verkehrsbelastung nicht zu groß. Allerdings muß durch den FUKO dafür gesorgt werden, daß bei der Steuerung der Kanäle vom Mobilteilnehmer zum FUKO die genannten 15 ms Antwortzeit nicht überschritten werden. Anderenfalls muß bei dem Mobilteilnehmer der Eindruck entstehen, daß seine Anforderung »überhört« worden ist. Daher sollten die Steuersignale für diese Richtung bevorzugt werden.

Es kann zweckmäßig sein, die Steuersignale nicht nur mit einer Quer-Paritätssicherung zu schützen. Vorzugsweise wird zusätzlich die Längs-Parität gesichert, wozu jeweils ein Oktett zusätzlich zu übertragen ist. Die Verkehrsangaben für die Steuerkanäle erhöhen sich dann um 33% (von 0,09 auf 0,12 Erl und von 0,18 auf 0,24 Erl). Mit gleichem Aufwand an Redundanz läßt sich auch ein sog. Vorwärtskorrekturverfahren anwenden.

Wie bereits erläutert, kommt es vor, daß ein Gesprächspartner dem anderen ins Wort fällt oder daß die beiden Datenstationen gleichzeitig senden. Bei dem hier geschilderten Sprachinterpolationsverfahren bringt nur einer von den beiden möglichen Fällen eine Schwierigkeit mit sich, nämlich der, bei dem ein mobiler Teilnehmer einem Teilnehmer, der ortsgebunden ist, ins Wort fällt. In einem solchen Fall kann zwar die mobile Station beim FUKO einen Kanal über den Steuerkanal anfordern, der FUKO kann aber den Kanal der mobilen Station nicht über den Steuerkanal zuteilen, weil der Empfänger der mobilen Station noch an den Sprechkanal angeschaltet ist. Daher unterbricht der FUKO für 10 ms den Sprechkanal und sendet 16 Oktetts der Form 11111111, dann zwei Oktetts der Form 01101000 sowie die Verbindungsnummer und die Sprechkanalnummer. Nach diesem üblichen Steuersignal wird die aktuelle Phrase P zeitrichtig fortgesetzt. Das Ohr wird diese kurze Unterbrechung kaum wahrnehmen, zumal bereits in der Gegenrichtung gesprochen wird. Sollte die Phrase P inzwischen beendet worden sein, wird sie in jedem Fall nach dem Steuersignal mit 16 Oktetts der Form 11111111 abgeschlossen.

Bei dem in folgenden Beschriebenen wird davon ausgegangen, daß eine Funkvermittlungsstelle wie eine Knotenvermittlung an das Drahtnetz angeschlossen ist. Ihr sollten dabei die Funkkonzentratoren (FUKO) sternförmig über feste Leitungen zugeordnet sein. Die FUKO stehen mit den mobilen Stationen, wie zuvor beschrieben, in Verbindung. Unter diesen Voraussetzungen ist es gegenüber dem bisher Ausgeführten auch möglich, die Sprachdetektion und -umcodierung für die Landteilnehmer in die Funkvermittlungsstelle, im folgenden kurz FuVST genannt, an den Übergang zum Drahtnetz des Systems zu verlegen und in der FuVST sowie in den darunterliegenden Netzbereichen mit Sprachinterpolation und 16 kbit/s Übertragungsgeschwindigkeit zu arbeiten. Für die FuVST arbeitet der Übergang zum Drahtnetz des Systems wie ein FUKO.

Wenn der Teilnehmer seinen Verbindungswunsch über den Organisationskanal dem FUKO mitgeteilt hat, meldet dieser die virtuelle Verbindung mit einem speziell gekennzeichneten gesicherten Verbindungsbeginn-Frame (»-Rahmen«) der FuVST. (Für die Kennzeichnung kann beispielsweise auch eine eigene Leitung, z. B. eine Organisationsleitung verwendet werden.) Dieser Beginn-Frame enthält die Kennungen für den gerufenen und für den rufenden Teilnehmer. Außerdem enthält er ein Oktett zur lokalen, d. h. nur im Ursprungs-FUKO verständlichen Kennzeichnung der Funk-Verbindung des rufenden Teilnehmers, nämlich des Ursprungsteilnehmers A.

Die FuVST »merkt« sich den FUKO, aus dem der Beginn-Frame kam, liest die Nummer des gerufenen Teilnehmers, findet ihn in einer Aktivdatei, fügt dem Beginn-Frame zur lokalen Kennzeichnung des ankommenden und des abgehenden Bündels zu den beiden FUKO je ein Oktett, nämlich eine Leitungsbündelkennung, an und sendet den Beginn-Frame auf eine Leitung zum Ziel-FUKO.

Der FUKO des gerufenen Teilnehmers, nämlich des Zielteilnehmers B, empfängt schließlich den Beginn-Frame, der die Oktetts enthält, mit denen der Ursprungs-FUKO und die FuVST die Verbindung in ihrem Bereich gekennzeichnet haben, sowie die Nummern des rufenden und des gerufenen Teilnehmers, nämlich eine Identifikationsinformation I und die Wählinformation W. Der FUKO des gerufenen Teilnehmers vergibt, wie zuvor beschrieben, eine Verbindungs-Kennzeichnung (1 Oktett), die nur in diesem FUKO verständlich ist, fügt diese dem Beginn-Frame an und sendet den Beginn-Frame zum FUKO des rufenden Teilnehmers als Quittung gekennzeichnet zurück. Beginn-Frame und Quittungs-Frame haben nun die FuVST durchlaufen. Mit Hilfe der Teilnehmernummer können dort diese beiden Frames identifiziert werden, und die Information des Quittungs-Frame kann abgespeichert werden. Die FuVST kann somit die virtuelle Verbindung überwachen.

Mit der Annahme des Rufes durch den gerufenen Teilnehmer (»Abheben«) beginnt der Gesprächszustand, was dem rufenden Teilnehmer gemeldet wird.

Zwischen dem FUKO und der FuVST brauchen nur so viele Kanäle vorhanden zu sein, wie dem FUKO Kanäle von und zu den mobilen Teilnehmern zur Verfügung stehen (Organisations- und Steuerkanäle eingeschlossen).

Wenn die mobile Teilnehmerstation, die den Sprachfluß mittels eines Sprachdetektors in Phrasen P unterteilt und das codierte Sprachsignal für 15 ms zwischenspeichert, bei dem betreffenden FUKO einen Sprechkanal für eine Phrase P anfordert, teilt der FUKO nicht nur dem Mobilteilnehmer einen Sprechkanal zu, sondern sucht auch einen Sprechkanal zur FuVST aus und sendet eine Zielkennungsfolge Z über den Steuerkanal dorthin. Die Zielkennungsfolge Z besteht aus dem Kennzeichen des Sprechkanals, den der FUKO ausgesucht hat, aus einem Oktett, das den Ziel-FUKO, nämlich $FUKO_B$, kennzeichnet, sowie aus der Verbindungskennzeichnung, die der Ziel-FUKO vergeben hat. Die beiden letzten Kennzeichnungen sind dem Ursprungs-FUKO, nämlich dem $FUKO_A$, aus dem Quittungs-Frame bekannt. Der Ursprungs-FUKO sendet die drei Oktetts der Zielkennungsfolge Z in der angegebenen Reihenfolge zur FuVST. Die FuVST liest aus der Zielkennungsfolge Z das erste und das zweite Oktett, ordnet dem (durch das erste Oktett bezeichneten) Sprechkanal vom Ursprungs-FUKO einen Sprechkanal zum durch das zweite Oktett bezeichneten Ziel-FUKO zu und sendet eine weitere Zielkennungsfolge über den Steuerkanal zum Ziel-FUKO. Diese weitere Zielkennungsfolge besteht aus zwei Oktetts. Das erste davon gibt den Sprechkanal an, auf dem die Phrase P von der FuVST zum Ziel-FUKO übertragen werden soll. Das zweite Oktett der weiteren Zielkennungsfolge ist das dritte Oktett aus der zuerst genannten Zielkennungsfolge.

In den Steuerkanälen werden im Ruhezustand Oktetts der Form 01101000 (Synchronisierzeichen) übermittelt. Diese Kombination wird daher zur Kennzeichnung von Kanälen oder virtuellen Verbindungen nicht verwendet. Wichtig ist, daß zur Trennung zweier aufeinanderfolgender Zielkriterien mindestens ein Oktett der Form 01101000 eingefügt wird.

Der Ziel-FUKO liest seinerseits die beiden Oktetts der Zielkennungsfolge, teilt der (durch das zweite Oktett bezeichneten) virtuellen Verbindung einen Funkkanal zum mobilen Teilnehmer zu und ordnet diesen dem durch das erste Oktett der weiteren Zielkennungsfolge bezeichneten Sprechkanal zu. Somit steht nach Ablauf der Zwischenspeicherzeit von 15 ms beim sprechenden Mobilteilnehmer eine durchgehende Verbindung vom sprechenden zum hörenden Teilnehmer zur Verfügung.

Bei einer Übertragungsgeschwindigkeit von 16 kbit/s ergibt sich eine Aussendezeit für die Zielkennungsfolge von $\geq 2$ ms. Die o. a. Zwischenspeicherzeit von 15 ms für die Phrase P entsteht nur beim sprechenden Teilnehmer. Der FUKO und die FuVSt brauchen nur für etwa 0,5 ms zwischenzuspeichern. Die Phrase P wird, wie weiter oben bereits erläutert, in den Sprechkanälen übertragen.

Die virtuelle Verbindung wird dadurch ausgelöst bzw. abgebaut, daß der FUKO des auslösenden Teilnehmers einen dem Beginn-Quittungs-Frame entsprechenden Auslöse-Frame aussendet, der die FuVSt durchläuft und von dem FUKO des anderen Teilnehmers empfangen und quittiert wird. Alle beteiligten Einrichtungen löschen nacheinander die entsprechenden Speichereinträge.

Zur Überwachung einer virtuellen Verbindung wird bei jedem Eintreffen einer neuen Phrase P in der FuVSt ein Zeitglied in seinen Zustand »Null« gesetzt. Läuft das Zeitglied ab, ohne daß eine Phrase P in einer der beiden Richtungen übertragen wird, wird die Verbindung ausgelöst, indem dem rufenden Teilnehmer oder beiden Teilnehmern Auslöse-Frames gesendet werden.

Es wurde ein Verfahren für die Übermittlung von Sprache mit Sprachinterpolation in einem digitalen Netz derart beschrieben, daß der FUKO wie eine Unter-FuVSt wirkt. Der FUKO ist auf diese Weise auch in der Lage, zwei Mobilteilnehmer, die sich innerhalb seines Bereiches befinden, nach Rückfrage in der Aktivdatei ohne weitere Mitwirkung der FuVSt miteinander zu verbinden. Dieser Fall kann insbesondere bei einigen Teilnehmerklassen des »Nichtöffentlichen beweglichen Landfunks« NöbL von Interesse sein.

Bei dem sog. »Öffentlichen beweglichen Landfunk« ÖbL treten dagegen vor allem Verbindungen von Mobilteilnehmern zum Drahtnetz und umgekehrt auf. In diesem Fall kann es zweckmäßig sein, die Kanäle des Leitungsabschnitts FUKO-FuVSt fest mit den Funkkanälen zwischen dem FUKO und den mobilen Teilnehmern zu verbinden. Der gesamte Verkehr kann dann zentral in der FuVSt gesteuert werden. Das hat den Vorteil, daß sie FuVSt in einem Überlastfall kurzfristig auch Kanäle von einem Nachbar-FUKO anbieten kann.

Schließlich ist es möglich, beide Fälle zu kombinieren und den einen Teil der Kanäle auf die eine Weise und den anderen Teil auf die andere Weise zu betreiben, wobei allerdings zu beachten ist, daß kein Kanal-Kollektiv kleiner als 35 wird.

Der paketweise Transport von Daten-, Text- sowie von redundanzarmer Faksimile- und Bildinformation von Teilnehmer zu Teilnehmer erfordert neben sog. Ende-zu-Ende-Sicherungen auch eine gesicherte Übermittlung. Das Verfahren »HDLC« gewährleistet dies.

Im folgenden wird angenommen, daß eine HDLC-Prozedur-Variante für die Übermittlung von Paketen aller genannten Dienste geeignet ist und von CCITT festgelegt ist. Unter dieser Voraussetzung ist es für die Unterstützung aller Dienste ausreichend, zu verlangen, daß das Netz außer Sprachphrasen auch HDLC-Frames (HDLC-»Rahmen«) von Teilnehmer zu Teilnehmer zu übertragen gestattet. Dabei ist es wünschenswert, für HDLC-Frames und Sprachphrasen äußerlich eine identische Struktur zu wählen, so daß die Vermittlungsstellen in aller Regel nicht gezwungen sind, die beiden zu unterscheiden. Im Extremfall reicht es, daß die korrespondierenden Teilnehmer die beiden unterscheiden können, wozu zwischen ihnen ein oder zwei verabredete Umschaltzeichen übertragen werden.

Bei der Abbildung der Struktur der HDLC-Frames auf die Struktur der Sprachphrasen ist folgendes zu beachten:

— Die HDLC-Prozedur schreibt vor, daß normalerweise außerhalb der Frames mit permanent gesendeten »Flags« der Form 01111110 die Synchronisierung der HDLC-Partner aufrecht erhalten wird. (Dies ist im Mobilfunknetz nicht erforderlich und nicht wünschenswert.) Stattdessen darf auch »Idle« — definiert als mindestens 16 aufeinanderfolgende auf 1 gesetzte Bits — gesendet werden. Danach kann mit mindestens zwei Flags die Synchronisierung wiederhergestellt werden. Letzteres Verfahren deckt sich mit dem hier für Sprachübertragung vorgeschlagenen Verfahren und wird daher für den HDLC-Übermittlungszustand vorgeschlagen.

— HDLC ist eine bitorientierte Prozedur, schreibt dem Benutzer daher keine Oktettstruktur vor und zerstört überdies — beim Schutz der Bit-Kombination für »Flag« — eine innerhalb eines Frame vorgegebene Oktettstruktur durch »Bitstuffing«. Daher kann »Idle« nicht oktettweise gesendet werden.

— Sieht man von der fehlenden Oktettstruktur ab, bleibt immer noch die Tatsache, daß bei Verwendung des Endekriteriums mit 16 Oktetts 11111111, dieses Endekriterium länger ist, als das kürzeste Idle-Kriterium bei HDLC (2 Oktetts 11111111).

Unterstellt man, dem Vermittlungsnetz sei lediglich die Struktur für Sprachphrasen bekannt, so bedeutet dies, daß der HDLC-Bitstrom (bestehend aus Flags, Frames und Idle) bei den mobilen Stationen und beim Übergang zum Drahtnetz des ISDN auf Sprachphrasen und -pausen abgebildet wird. Der durch einen HDLC-Sender gesendete Bitstrom wird (inklusive Flags und Idle) auf die oktettweise Struktur der Sprechpause, d. h. auf 16 Oktetts 11111111 abgetastet:

— Wird im Zustand Sprachphrase« im HDLC-Bitstrom eine Bitanordnung gefunden, die der Sprechpause entspricht, also 16 Oktetts 11111111, so wird die Übertragung der »Sprachphrase«, die HDLC-Frames enthält, wie üblich abgeschlossen und damit der betreffende Leitungsabschnitt freigegeben.

— Wird im Zustand »Sprechpause« im HDLC-Bitstrom die Kombination 011111110 (Flag) erkannt, so wird wieder der Zustand »Sprachphrase« eingestellt und eine »Sprachphrase«, die HDLC-Frames enthält, übertragen.

Somit ist es möglich, einen HDLC-Frame oder eine mit Flags (mehrere Oktetts 011111110) verbundene Frame-Folge wie eine Sprachphrase zu übertragen. Wenn zwischen den HDLC-Frames kurze HDLC-Idle-Zustände auftreten, die kürzer als 16 Oktetts 11111111 sind, kann eine »Sprachphrase« mehrere HDLC-Frames enthalten.

Andererseits kann es sein, daß im HDLC-Frame eine Folge von »1« vorkommt, die länger als 16 Oktetts 11111111 ist. In diesem Falle wird die virtuelle Verbindung in den Ruhezustand versetzt. Da aber dem HDLC-Empfänger »Idle« gemeldet wird, solange keine Flags oder Frames auf seiner virtuellen Verbindung empfangen werden, wird auch dieser Zustand richtig übertragen. Lediglich bei temporären Überlastfällen, wenn also für die Übertragung einer »Sprachphrase«, die einen HDLC-Frame enthält, gerade kein Kanal frei ist und die Vermittlungsstelle den Anfang des Frame unterdrückt, entstehen Fehler. Diese Fehler werden allerdings beim HDLC-Empfänger durch die zyklische Sicherung in der Regel entdeckt und eine Wiederholung des Frame durch den HDLC-Sender angefordert.

Bisher wurde davon ausgegangen, daß in den Vermittlungsstellen Sprachphrasen, die Sprache enthalten, und »Sprachphrasen«, die HDLC-Frames enthalten, nicht unterschieden werden. Dies ist zwar bei einer Datenübertragung abwechselnd in beiden Richtungen ausreichend, macht aber bei gleichzeitiger Übertragung in beiden Richtungen Schwierigkeiten. Macht man jedoch die beiden unterscheidbar, indem man am Beginn der Sprachphrase ein Dienstkennzeichen einführt, so lassen sich sowohl die Schwierigkeiten verringern als auch die Strategie bei temporärer Überlast verbessern. Die »Sprachphrasen«, die HDLC-Frames enthalten, können dann »vor« einem abgehenden Bündel im Speicher kurz zwischengespeichert und in der Reihenfolge ihres Eintreffens zu einem Zeitpunkt, wenn die temporäre Überlast vorbei ist, ausgegeben werden, und zwar unverstümmelt. Bei Überlauf des Pufferspeichers wird mit den (HDLC-Frames enthaltenden) »Sprachphrasen« genauso verfahren wie mit gewöhnlichen Sprachphrasen.

Ferner kann bei gleichzeitiger Datenübertragung in beiden Richtungen sichergestellt werden, daß Datenblöcke in der Richtung von dem FUKO zu dem mobilen Endgerät nicht durch Steuerbefehle unterbrochen werden, sondern daß Steuerbefehle erst am Blockende nachgesendet werden.

Im Falle unterschiedlicher Behandlung von Sprach- und HDLC-Verbindungen könnten Verkehrsstatistiken angefertigt und ausgewertet werden, um ein Erkennungszeichen zu gewinnen.

Ein solches Erkennungszeichen läßt sich auf folgende Weise realisieren:

Es wurde bereits beschrieben, daß in den Sprachkanälen am Beginn einer Sprachphrase ein Oktett der Form 00000000 übertragen wird, das vom Empfänger nicht decodiert wird. Wenn bei »Sprachphrasen«, die HDLC-Frames enthalten, stattdessen ein Oktett der Form 01111110 übertragen wird, können die beiden Arten von Phrasen eindeutig unterschieden werden.

Fig. 3 und 4 zeigen, wie bereits erläutert, jeweils schematisch den Aufbau einer ersten bzw. einer zweiten Aufbaudatenfolge D' bzw. D''. Dabei ist mit W die Wählinformation bezeichnet, die die Zielvermittlungsstellen-Kennung $KVSt_B$ und die Zielteilnehmer-Kennung KB enthält. Mit I ist die Identifikationsinformation bezeichnet, die die Ursprungsvermittlungsstellen-Kennung $KVSt_A$ und die Ursprungsteilnehmer-Kennung KA enthält. Mit $A—D_1$ bzw. $D_1—B$ sind die Leitungsbündel-Kennungen bezeichnet.

Fig. 5 zeigt, wie ebenfalls bereits erläutert, schematisch den Aufbau einer Sprachinformation S, wobei mit Z die Zielkennungsfolge, mit P die Phrase und mit E eine Endekennung bezeichnet sind.

Die gegebene Beschreibung und die Figuren beziehen sich jeweils lediglich auf ein bevorzugtes Ausführungsbeispiel für die vorliegende Erfindung. Die Erfindung ist keinesfalls auf dieses Ausführungsbeispiel beschränkt.

**Patentansprüche**

1. Universelles Mobilfunk-Digitalnetz zur paketvermittelten Informationsübertragung, bei dem jeder mobile Teilnehmer jeweils über zumindest eine Funkverbindung mit einem ortsgebundenen Funkkonzentrator verbindbar ist, bei dem eine von einem mobilen Ursprungsendgerät (A) in das universelle Mobilfunk-Digitalnetz (UMD) eingegebene Verbindungsinitiierung dazu verwendet wird, eine virtuelle Ursprungsverbindung ($VV_A$) zwischen dem mobilen Ursprungsendgerät (A) und dem ihm aktuell zugeteilten Funkkonzentrator (FUKO$_A$) aufzubauen, bei dem eine von dem mobilen Ursprungsendgerät (A) in das universelle Mobilfunk-Digitalnetz (UMD) eingegebene Wählinformation (W) dazu verwendet wird, virtuelle Teilverbindungen (VV$_T$) und eine virtuelle Zielverbindung (VV$_B$) zwischen einem mobilen Zielendgerät (B) und einem ihm aktuell zugeteilten weiteren, ggf. auch demselben Funkkonzentrator (FUKO$_A$ oder FUKO$_B$) aufzubauen, und bei dem zu übertragende Information in Informationsabschnitte mit variablen, vom Übertragungsverfahren und vom Vermittelungsverfahren nicht begrenzten Längen eingeteilt wird, dadurch gekennzeichnet, daß ein Informationsabschnitt in Form eines Blocks mit einer vorangestellten Zielkennungsfolge (Z), die Angaben über jeweils ggf. zu durchlaufende virtuelle Teilverbindungen (VV$_T$) und die zu durchlaufende virtuelle Ursprungsverbindung (VV$_A$) und/oder die zu durchlaufende virtuelle Zielverbindung (VV$_B$) je nach Übertragungsrichtung für die Information enthält, und mit einer an das Ende des Informationsabschnittes gestellten und dessen Ende signalisierenden Endekennung (E), über die jeweils zwischen dem mobilen Ursprungsendgerät (A) und dem mobilen Zielendgerät (B) für einen betreffenden aktuellen Block abschnittsweise aufgebauten realen Verbindungen (VR) zeitrichtig übertragen wird, daß die beiden Übertragungseinrichtungen von Ursprungsverbindung und Zielverbindung jeweils von den Funkkonzentratoren aus gesteuert werden, daß die Informationsabschnitte an ein vorbestimmtes, in Rasterabschnitte unterteilbarer Zeitraster angepaßt sind, daß jeweils vollständige Rasterabschnitte eines aktuellen Informationsabschnittes unterdrückt werden, wenn keine reale Funkverbindung und/oder Leitung zeitgerecht zur Verfügung steht, daß von dem Zeitpunkt an, zu dem eine reale Funkverbindung und/oder Leitung zur Verfügung steht, der Rest des Informationsabschnittes zeitrichtig mit Beginn eines neuen Rasterabschnittes übertragen wird, daß alle betreffenden realen Verbindungen nach Beendigung des Informationsabschnittes abgebaut werden und daß alle betreffenden virtuellen Verbindungen (VV$_A$) nach Beendigung der Informationsübertragung abgebaut werden.

2. Universelles Mobilfunk-Digitalnetz nach Anspruch 1, dadurch gekennzeichnet, daß das Zeitraster aus Rasterabschnitten der Dauer von 8 ms besteht.

3. Universelles Mobilfunk-Digitalnetz zur paketvermittelten Informationsübertragung, bei dem jeder mobile Teilnehmer jeweils über zumindest eine Funkverbindung mit einem ortsgebundenen Funkkonzentrator verbindbar ist, bei dem eine von einem mobilen Ursprungsendgerät (A) in das universelle Mobilfunk-Digitalnetz (UMD) eingegebene Verbindungsinitiierung dazu verwendet wird, eine virtuelle Ursprungsverbindung (VV$_A$) zwischen dem mobilen Ursprungsendgerät (A) und dem ihm aktuell zugeteilten Funkkonzentrator (FUKO$_A$) aufzubauen, bei dem eine von dem mobilen Ursprungsendgerät (A) in das universelle Mobilfunk-Digitalnetz (UMD) eingegebene Wählinformation (W) dazu verwendet wird, virtuelle Teilverbindungen (VV$_T$) und eine virtuelle Zielverbindung (VV$_B$) zwischen einem mobilen Zielendgerät (B) und einem ihm aktuell zugeteilten weiteren, ggf. auch demselben Funkkonzentrator (FUKO$_A$ oder FUKO$_B$) aufzubauen, und bei dem zu übertragende Information in Informationsabschnitte mit variablen, vom Übertragungsverfahren und vom Vermittelungsverfahren nicht begrenzten Längen eingeteilt wird, dadurch gekennzeichnet, daß ein Informationsabschnitt in Form eines Blocks mit einer vorangestellten Zielkennungsfolge (Z), die Angaben über jeweils ggf. zu durchlaufende virtuelle Teilverbindungen (VV$_T$) und die zu durchlaufende virtuelle Ursprungsverbindung (VV$_A$) und/oder die zu durchlaufende virtuelle Zielverbindung (VV$_B$) je nach Übertragungsrichtung für die Information enthält, und mit einer an das Ende des Informationsabschnittes gestellten und dessen Ende signalisierenden Endekennung (E), über die jeweils zwischen dem mobilen Ursprungsendgerät (A) und dem mobilen Zielendgerät (B) für einen betreffenden aktuellen Block abschnittsweise aufgebauten realen Verbindungen (VR) zeitrichtig übertragen wird, daß die beiden Übertragungseinrichtungen von Ursprungsverbindung und Zielverbindung jeweils von den Funkkonzentratoren aus gesteuert werden, daß jeweils 16 Oktetts eines aktuellen, augenblicklich nicht übertragbaren Informationsabschnittes zwischengespeichert werden, daß, sobald eine reale Funkverbindung und/oder Leitung zur Verfügung steht, diese 16 Oktetts übertragen werden, daß anschließend an die Übertragung der 16 Oktetts, die zuvor gespeichert wurden, der aktuelle Rest des Informationsabschnittes zeitrichtig entsprechend dem Zeitraster angefügt und übertragen wird, daß alle betreffenden realen Verbindungen nach Beendigung des Informationsabschnittes abgebaut werden und daß alle betreffenden virtuellen Verbindungen (VV$_A$) nach Beendigung der Informationsübertragung abgebaut werden.

4. Universelles Mobilfunk-Digitalnetz nach Anspruch 1, 2 oder 3, dadurch gekennzeichnet, daß jeweils anstelle des mobilen Ursprungsendgerätes (A) oder des mobilen Zielendgerätes (B) ein ortsgebundenes Endgerät an einem Verbindungsaufbau beteiligt ist.

5. Universelles Mobilfunk-Digitalnetz nach Anspruch 1, 2 oder 3, dadurch gekennzeichnet, daß die virtuellen Teilverbindungen (VV$_T$) über ortsgebundene Durchgangsvermittlungsstellen (VSt$_{D1}$...VSt$_{Dn}$) verlaufen.

6. Universelles Mobilfunk-Digitalnetz nach einem der vorhergehenden Ansprüche, dadurch gekennzeichnet, daß zum Aufbauen der virtuellen Verbindung (VV$_A$ und/oder VV$_B$, ggf. VV$_T$) zunächst aufgrund einer dem mobilen Ursprungsendgerät (A) fest zugeteilten Kennung und aufgrund einer den dem mobilen Ursprungsendgerät (A) aktuell zugeteilten Funkkonzentrator (FU-KO$_A$) und/oder der dem mobilen Zielendgerät (B) aktuell zugeteilten, ggf. demselben Funkkonzentrator (FUKO$_B$ oder FUKO$_A$) oder eine ortsgebundene Zielvermittlungsstelle (VST$_B$) bestimmenden Wählinformation (W), nämlich einer Zielvermittlungsstellen-Kennung (KVST$_B$), eine Leitwegsuche durchgeführt wird, bei der Funkverbindungsbündel und/oder Leitungsbündel ausgewählt werden, über welche Funkverbindungsbündel und/oder über welche Leitungsbündel der Ursprungspunkt der aufzubauenden Verbindung, mit dem Zielpunkt verbindbar ist und in welchen Funkverbindungsbündeln und/oder in welchen Leitungsbündeln zum Zeitpunkt des Beginns der Leitwegsuche Informationsübertragungskapazität frei ist, daß der dem mobilen Ursprungsendgerät (A) aktuell zugeteilte Funkkonzentrator (FUKO$_A$) oder eine Ursprungsvermittlungsstelle (VST$_A$) über eine freie Leitung des ausgesuchten Leitungsbündels, das zu einer Durchgangsvermittlungsstelle (VST$_{D1}$) oder zu der Zielvermittlungsstelle (VST$_B$) oder zu dem dem mobilen Zielendgerät (B) aktuell zugeteilten Funkkonzentrator (FUKO$_B$) führt, eine Aufbaudatenfolge (D') an die Durchgangsvermittlungsstelle (VST$_{D1}$) oder die Zielvermittlungsstelle (VST$_B$) oder den dem mobilen Zielendgerät (B) aktuell zugeteilten Funkkonzentrator (FUKO$_B$) sendet, wobei die Aufbaudatenfolge (D') die Wählinformation (W) in Form einer Zielvermittlungsstellen-Kennung (KVST$_B$) und einer Zielendgerät-Kennung (KB), eine Identifikationsinformation (I) in Form der Ursprungsvermittlungsstelle (KVST$_A$) und einer Ursprungsendgerät-Kennung (KA) und eine die ausgesuchte Kanalgruppe oder das ausgesuchte Leitungsbündel betreffende Leitungsbündel-Kennung (A—D$_1$) enthält, daß, falls das ausgesuchte Leitungsbündel zu der Durchgangsvermittlungsstelle (VST$_{D1}$) führt, diese aufgrund der Zielvermittlungsstellen-Kennung (KVST$_B$) innerhalb der Wählinformation (W) eine Leitwegsuche durchführt, bei der ein weiteres Leitungsbündel, über das die erste Durchgangsvermittlungsstelle (VST$_{D1}$) mittelbar über eine weitere Durchgangsvermittlungsstelle (VST$_{D1}$) mit der Zielvermittlungsstelle (VST$_B$) verbindbar ist oder unmittelbar mit dieser verbunden ist und in dem zum Zeitpunkt des Beginns dieser Leitwegsuche Informationsübertragungskapazität frei ist, ausgesucht wird, daß die erste Durchgangsvermittlungsstelle (VST$_{D1}$) über eine freie Leitung des ausgesuchten Leitungsbündels, das zu der weiteren Durchgangsvermittlungsstelle (VST$_{D2}$) oder zu der Zielvermittlungsstelle (VST$_B$) führt, eine weitere Aufbaudatenfolge (D'') an die zweite Durchgangsvermittlungsstelle (VST$_{D2}$) oder die Zielvermittlungsstelle (VST$_B$) sendet, wobei die weitere Aufbaudatenfolge (D'') die Wählinformation (W) in Form der Zielvermittlungsstellen-Kennung (KVST$_B$) und der Zielendgerät-Kennung (KB), die Identifikations-Kennung (I) in Form der Ursprungsvermittlungsstellen-Kennung (KVST$_A$) und der Ursprungsendgerät-Kennung (KA), die erste Leitungsbündel-Kennung (A—D$_1$) und eine weitere Leitungsbündel-Kennung (D$_1$—D$_2$ bzw. D$_1$—B) enthält, daß jeweils bei Durchlaufen einer weiteren Durchgangsvermittlungsstelle (VST$_{D3}$ ... VST$_{Dn}$) eine weitere Leitwegsuche durchgeführt wird und jeweils die das ausgesuchte Leitungsbündel betreffende Leitungsbündel-Kennung an die jeweils bereits bestehende Aufbaudatenfolge angefügt wird, daß die Zielvermittlungsstelle (VST$_B$) oder der dem mobilen Zielendgerät (B) aktuell zugeteilte Funkkonzentrator (FUKO$_B$) die an sie oder ihn gerichtete, von der im Verbindungszug vor ihr oder ihm liegende Durchgangsvermittlungsstelle (z. B. VST$_{D2}$) oder unmittelbar von der Ursprungsvermittlungsstelle (VST$_A$) oder dem dem mobilen Ursprungsendgerät (A) aktuell zugeteilten Funkkonzentrator (FUKO$_A$) gesendete Aufbaudatenfolge (z. B. D'') speichert und ein die gesamte Information der bis zum Erreichen der Zielvermittlungsstelle oder des dem mobilen Zielendgerät (B) aktuell zugeteilten Funkkonzentrator (FUKO$_B$) entstandenen Aufbaudatenfolge (z. B. D'') enthaltendes Quittungstelegramm an die Ursprungsvermittlungsstelle (VST$_A$) oder den dem mobilen Ursprungsendgerät (A) aktuell zugeteilten Funkkonzentrator (FUKO$_A$) zurücksendet, wo diese Information ebenfalls gespeichert wird, und daß die realen Teilverbindungen jeweils ausgelöst werden, nachdem zuvor in jeder betreffenden Durchgangsvermittlungsstelle (VST$_{D1}$, VST$_{D2}$) die jeweils gesendete Aufbaudatenfolge bzw. das Quittungstelegramm gespeichert worden ist.

7. Universelles Mobilfunk-Digitalnetz nach einem der vorhergehenden Ansprüche, dadurch gekennzeichnet, daß die zu übertragende Information aus Echtzeitdaten besteht und daß sowohl das Ursprungsendgerät (A) als auch das Zielendgerät (B) beispielsweise eine messende Einrichtung oder ein Prozeßrechner ist.

8. Universelles Mobilfunk-Digitalnetz nach einem der Ansprüche 1 bis 5, dadurch gekennzeichnet, daß die zu übertragende Information eine digitalisierte Sprachinformation (S) ist, daß die Informationsabschnitte Phrasen (P), d. h. Sprachabschnitte, sind und daß das Ursprungsendgerät (A) bzw. das Zielendgerät (B) eine Fernsprechstation ist.

9. Universelles Mobilfunk-Digitalnetz nach Anspruch 1, dadurch gekennzeichnet, daß die Informationsübertragung zu einem mobilen Endgerät von dem jeweiligen Funkkonzentrator (FUKO$_A$ bzw. FUKO$_B$) über einen speziellen Steuerkanal, der nicht identisch mit einem für Zwecke des Verbindungsaufbaus bzw. für Organisationszwecke für das universelle Mobilfunk-Digitalnetz (UMD) vorgesehenen Organisationskanal ist, durchgeführt wird.

10. Universelles Mobilfunk-Digitalnetz nach Anspruch 9, dadurch gekennzeichnet, daß der jeweilige Funkkonzentrator (FUKO$_A$ bzw. FUKO$_B$) beim Aufbau einer Verbindung über den Organisationskanal der betreffenden Verbindung eine Nummer zuordnet, die nur für die Dauer der Verbindung und nur für diese und den betreffenden Funkkonzentrator (FUKO$_A$ bzw. FUKO$_B$) gilt.

11. Universelles Mobilfunk-Digitalnetz nach Anspruch 10, dadurch gekennzeichnet, daß alle Kanäle des Funkkonzentrators (FUKO$_A$ bzw. FU-KO$_B$) numeriert sind und daß jeweils mit einem bestimmten Bit einer Kanalnummer gekennzeichnet ist, in welcher Richtung der betreffende Kanal betrieben wird.

12. Universelles Mobilfunk-Digitalnetz nach Anspruch 8, dadurch gekennzeichnet, daß jeweils sendeseitig ein der betreffenden Verbindung an geeigneter Stelle fest oder bedarfsweise zugeordneter Sprachdetektor vorgesehen ist, der in der Lage ist, Sprechpausen zu erkennen und daraufhin die Phrasen (P) zu bilden.

13. Universelles Mobilfunk-Digitalnetz nach Anspruch 12, dadurch gekennzeichnet, daß das eine Phrase (P) bildende codierte Sprachsignal auf der jeweils sendenden Seite für eine vorbestimmte Zwischenspeicherzeit von beispielsweise 15 ms zwischengespeichert wird, in welcher Zwischenspeicherzeit die der zu sendenden Phrase (P) voranzustellende Zielkennungsfolge (Z) gebildet und ausgesendet wird.

14. Universelles Mobilfunk-Digitalnetz nach Anspruch 13, dadurch gekennzeichnet, daß die Zwischenspeicherzeit so groß gewählt ist, daß eine Karenzzeit entsteht, innerhalb derer eine Unterscheidungsmöglichkeit zwischen Sprache einerseits und Knackgeräuschen andererseits gegeben ist.

15. Universelles Mobilfunk-Digitalnetz nach Anspruch 8, dadurch gekennzeichnet, daß die Durchlaufzeit der Sprache durch den jeweils betreffenden Funkkonzentrator (FUKO$_A$ bzw. FU-KO$_B$) und/oder eine Vermittlungsstelle in jedem Fall gleich ist.

16. Universelles Mobilfunk-Digitalnetz nach einem der vorhergehenden Ansprüche, dadurch gekennzeichnet, daß für einen Informationsabschnitt mit einer überdurchschnittlichen Anzahl von Oktetts in der Zielkennungsfolge (Z) eine Prioritätsangabe vorgesehen ist, aufgrund derer ein derart gekennzeichneter Informationsabschnitt bzw. eine Phrase (P) bei dem jeweils aktuellen Aufbau einer realen Verbindung bevorzugt berücksichtigt wird.

17. Universelles Mobilfunk-Digitalnetz nach Anspruch 8, dadurch gekennzeichnet, daß in dem Fall, in dem eine Phrase (P) in Richtung von einem mobilen Teilnehmer beendet ist, die Mobilteilnehmerstation oder der betreffende Funkkonzentrator (z. B. FUKO$_A$) 16 Oktetts der Form 11111111 sendet und anschließend den benutzten Sprechkanal freigibt.

18. Universelles Mobilfunk-Digitalnetz nach Anspruch 6, dadurch gekennzeichnet, daß die Aufbaudatenfolgen (D', D'') mit einem Sicherungsbit, beispielsweise einem Paritätsbit, gesichert sind.

19. Universelles Mobilfunk-Digitalnetz nach Anspruch 8, dadurch gekennzeichnet, daß für den Fall, daß für einen von einem mobilen Endgerät zu einem drahtgebundenen Endgerät zu übertragenden Informationsabschnitt kein realer Kanal zeitgerecht zur Verfügung gestellt werden kann oder das drahtgebundene Endgerät die Anforderung eines Kanals überhört hat oder die Anforderung durch Anforderungen anderer mobiler Endgeräte gestört war, das mobile Endgerät nach Ablauf einer Zwischenspeicherzeit von 15 ms erneut einen Kanal anfordert, jedoch das Aussenden der Anforderung noch um den Zeitbedarf für die Übertragung von 0, 1, 2 oder 3 Oktetts weiter verzögert und die tatsächliche Verzögerung des Aussendens stochastisch bestimmt wird.

20. Universelles Mobilfunk-Digitalnetz nach Anspruch 8, dadurch gekennzeichnet, daß für den Fall, daß der Empfänger der mobilen Station an den Sprechkanal geschaltet ist, während der betreffende Funkkonzentrator (z. B. FUKO$_A$) diesen Kanal der mobilen Station zuteilen sollte, der Funkkonzentrator (FUKO$_A$) den Sprechkanal für eine Zeit von 10 ms unterbricht und 16 Oktetts der Form 11111111, zwei Oktetts für die Ruhezustandskennung sowie die betreffende Verbindungsnummer und die betreffende Sprechkanalnummer sendet.

21. Universelles Mobilfunk-Digitalnetz nach Anspruch 20, dadurch gekennzeichnet, daß für den Fall, daß die betreffende aktuelle Phrase (P) zwischenzeitlich beendet worden ist, diese Phrase (P) mit 16 Oktetts der Form 11111111 abgeschlossen wird.

22. Universelles Mobilfunk-Digitalnetz nach Anspruch 1, 2 oder 3, dadurch gekennzeichnet, daß zur Überwachung der virtuellen Verbindung (VV$_A$, VV$_B$, VV$_T$) jeweils mit Beginn eines betreffenden neuen Informationsabschnittes in der betreffenden Vermittlungsstelle ein Zeitglied in seinen Zustand »NULL« gesetzt wird und daß die virtuelle Verbindung automatisch ausgelöst wird, wenn das Zeitglied einen vorbestimmten Grenzwert erreicht.

23. Universelles Mobilfunk-Digitalnetz nach Anspruch 8, dadurch gekennzeichnet, daß an den Beginn einer Phrase (P) ein Dienstkennzeichen zum Zwecke einer Unterscheidbarkeit der Phrase (P) von einem HDLC-Frame gesetzt ist.

**Claims**

1. A universal mobile radio digital network for packetswitched data transmission, wherein each mobile subscriber can be connected via at least one radio connection to a stationary radio concentrator, wherein a connection initiation input into the universal mobile radio digital network (UMD) by a mobile original terminal (A) is used to establish a virtual original connection (VV$_A$) between the mobile original terminal (A) and the radio concentrator (FUKO$_A$) currently assigned thereto, wherein an item of dialling information (W) input into the universal mobile radio digital network (UMD) by the mobile original terminal (A) is used to establish virtual subsidiary connections (VV$_T$) and a virtual target connection (VV$_B$) between a mobile target terminal (B) and a further, possibly the same, radio concentrator (FU-KO$_B$ or FUKO$_A$) currently assigned thereto, and wherein information which is to be transmitted is divided into information sections of variable lengths which are not limited by the transmission process and by the switching process, characterised in that an information section, in the form of a block comprising a preceding target code sequence (Z), which contains information relating to virtual subsidiary connections (VV$_T$) which may need to be passed through and the virtual original connection (VV$_A$) which is to be passed through and/or the virtual target connection (VV$_B$) which is to be passed through depending upon the direction of transmission for the information, and comprising an end code (E) which is attached to the end of the information section and signals the end thereof, is promptly transmitted via the real connections (VR) which are established section-wise between the mobile original terminal (A) and the mobile target terminal (B) for the current block in question, that the two transmission directions of original connection and target connection are each controlled by the radio concentrator, that the information sections are matched to a predetermined time raster which can be sub-divided into raster sections, that complete raster sections of a current information section are supressed when no real radio connection and/or line is promptly available, that from the time at which a real radio connection and/or line is available the remainder of the information section is promptly transmitted at the beginning of a new raster section, that all the relevant real connections are dis-established following the end of the information section, and that all the relevant virtual connections (VV$_A$) are dis-established following the end of the information transmission.

2. A universal mobile radio digital network as claimed in claim 1, characterised in that the time raster comprises raster sections whose duration amounts to 8 ms.

3. A universal mobile radio digital network for packetswitched data transmission, wherein each mobile subscriber can be connected via at least one radio connection to a stationary radio concentrator, wherein a connection initiation input into the universal mobile radio digital network (UMD) by a mobile original terminal (A) is used to establish a virtual original connection (VV$_A$) between the mobile original terminal (A) and the radio concentrator (FUKO$_A$) currently assigned thereto, wherein an item of dialling information (W) input into the universal mobile radio digital network (UMD) by the mobile original therminal (A) is used to establish virtual subsidiary connections (VV$_T$) and a virtual target connection (VV$_B$) between a mobile target terminal (B) and a further, possibly the same, radio concentrator (FUKO$_A$ or FUKO$_B$) currently assigned thereto, and wherein information which is to be transmitted is divided into information sections of variable lengths which are not limited by the transmission process and by the switching process, characterised in that an information section, in the form of a block comprising a preceding target code sequence (Z), which contains information relating to virtual subsidiary connections (VV$_T$) which may have to be passed through and the virtual original connection (VV$_A$) which is to be passed through and/or the virtual target connection (VV$_B$) which is to be passed through depending upon the direction of transmission for the information, and comprising an end code (E) which is attached to the end of the information section and signals the end thereof, is promptly transmitted via the real connections (VR) which are established section-wise between the mobile original terminal (A) and the mobile target terminal (B) for the relevant current block, that the two directions of transmission of original connection and target connection are each controlled by the radio concentrators, that in each case 16 octets of a current, instantaneously nontransmissible information section are intermediately stored, that as soon as a real radio connection and/or line is available these 16 octets are transmitted, that following the transmission of the 16 octets which have been previously stored, the current remainder of the information section is promptly attached and transmitted in accordance with the time raster, that all the relevant real connections are dis-established following the end of the information section and that all the relevant virtual connections (VV$_A$) are dis-established following the end of the information transmission.

4. A universal mobile radio digital network as claimed in claims 1, 2 or 3, characterised in that in place of the mobile original terminal (A) or the mobile target terminal (B) a stationary terminal participates in a connection establishment.

5. A universal mobile radio digital network as claimed in claims 1, 2 or 3, characterised in that the virtual subsidiary connections (VV$_T$) extend via stationary transit exchanges (VSt$_{D1}$ ... VSt$_{Dn}$).

6. A universal mobile radio digital network as claimed in one of the preceding claims, characterised in that for the establishment of the virtual connection (VV$_A$ and/or VV$_B$, possibly VV$_T$), firstly a route-finding operation is carried out on the basis of a code permanently assigned to the mobile original terminal (A) and on the basis of an item of dialling information (W) which determines the radio concentrator (FUKO$_A$) currently assigned to the mobile original terminal (A) and/or the radio concentrator (FUKO$_B$ or FUKO$_A$), possibly the same, radio concentrator, currently assigned to the mobile target terminal (B), or a stationary target exchange (VSt$_B$), which item of dialling information is in fact a target exchange code (KVSt$_B$), wherein radio connection groups and/or line groups are selected, via which radio connection groups and/or via which line groups the point of origin of the connection to be established can be connected to the target point, and which radio connection groups and/or in which line groups information transmission capacity is available at the beginning of the route-finding operation, that via a free line of the selected line group which leads to a transit exchange (VSt$_{D1}$) or to the target exchange (VSt$_B$) or the radio concentrator (FUKO$_B$) currently assigned to the mobile target terminal (B), the radio concentrator (FUKO$_A$) currently assigned to the mobile original terminal (A), or an original exchange (VSt$_A$) transmits an establishment data sequence (D') to the transit exchange (VSt$_{D1}$) or the target exchange (VSt$_B$) or the radio concentrator (FUKO$_B$) currently assigned to the mobile target terminal (B), where the establishment data sequence (D') contains the dialling information (W) in the form of a target exchange code (KVSt$_B$) and a target terminal code (KB), further contains an item of identification information (I) in the form of the original exchange code (KVSt$_A$) and an original terminal code (KA), and further contains a line group code (A-D$_1$) relating to the selected channel group or the selected line group, that if the selected line group leads to the transit exchange (VSt$_{D1}$), this exchange performs a route-finding operation on the basis of the target exchange code (KVSt$_B$) within the dialling information (W), wherein a further line group is selected via which the first transit exchange (VSt$_{D1}$) can be indirectly connected to the target exchange (VSt$_B$) via a further transit exchange (VST$_{D2}$) or can be directly connected thereto, and in which information transmission capacity is available a the time of the start of this routefinding operation, that via a free line of the selected line group which leads to the further transit exchange (VST$_{D2}$) or to the target exchange (VST$_B$), the first transit exchange (VST$_{D1}$) transmits a further establishment data sequence (D'') to the second transit exchange (VST$_{D2}$) or the target exchange (VST$_B$), where the further establishment data sequence (D'') contains the dialling information (W) in the form of the target exchange code (KVST$_B$) and the target terminal code (DB), further contains the identification code (I) in the form of the original exchange code (KVST$_A$) and the original terminal code (KA), further contains the first line group code (A-D$_1$) and further line group code (D$_1$-D$_2$ and D$_1$-B), that whenever a further transit exchange (VST$_{D3}$ ... VST$_{Dn}$) is passed through a further route-finding operation is carried out, and the line group code relating to the selected line group is attached to the already existing establishment data sequence, that the target exchange (VST$_B$) or the radio concentrator (FUKO$_B$) currently assigned to the mobile target terminal (B) stores the establishment data sequence (e. g. D'') which is directed towards it and which has been transmitted from the transit exchange (e. g. VST$_{D2}$) which precedes it in the connection path or directly from the original exchange (VST$_A$) or the radio concentrator (FUKO$_A$) currently assigned to the mobile original terminal (A), and sends back an acknowledgement telegram, which contains all the information of the establishment data sequence (e. g. D'') which has been formed by the time the target exchange or the radio concentrator (FUKO$_B$) currently assigned to the mobile target terminal (B) has been reached, to the original exchange (VST$_A$) or to the radio concentrator (FUKO$_A$) currently assigned to the mobile original terminal (A) where this information is likewise stored, and that the real subsidiary connections are cleared when the transmitted establishment data sequence or acknowledgement telegram has been stored in each relevant transit exchange (VST$_{D1}$, VST$_{D2}$).

7. A universal mobile radio digital network as claimed in one of the preceding claims, characterised in that the information which is to be transmitted comprises real time data and that both the original terminal (A) and the target terminal (B) comprise for example a measuring device or a process computer.

8. A universal mobile radio digital network as claimed in one of the claims 1 to 5, characterised in that the information to be transmitted is a digitalised item of speech information (S), that the information sections are phrases (P), i. e. speech sections, and that the original terminal (A) and the target terminal (B) comprise a telephone station.

9. A universal mobile radio digital network as claimed in claim 1, characterised in that the data transmission to a mobile terminal from the relevant radio concentrator (FUKO$_A$ and FUKO$_B$) is carried out via a special control channel which is non-identical to an organisation channel provided for purposes of connection establishment and for organisation purposes for the universal mobile radio digital network (UMD).

10. A universal mobile radio digital network as claimed in claim 9, characterised in that during the establishment of a connection, via the organisation channel of the relevant connection the relevant radio concentrator (FUKO$_A$ and FUKO$_B$) is assigned a number which is valid only for the duration of the connection and only for this connection and for the relevant radio concentrator (FUKO$_A$ and FUKO$_B$).

11. A universal mobile radio digital network as claimed in claim 10, characterised in that all the channels of the radio concentrator (FUKO$_A$ and FUKO$_B$) are numbered, and that a specific bit of a channel number in each case characterises in which direction the relevant channel is operated.

12. A universal mobile radio digital network as claimed in claim 8, characterised in that at the transmitting end there is in each case arranged a speech detector which is assigned to the relevant connection at a suitable point either permanently or as and when needed and which is capable of recognising speech intervals and subsequently forming the phrases (P).

13. A universal mobile radio digital network as claimed in claim 12, characterised in that at the transmitting end the coded speech signal which forms a phrase (P) is intermediately stored for a predetermined intermediate storage time of for example 15 ms, in which intermediate storage time the target code sequence (Z) which is to precede the phrase (P) to be transmitted is formed and transmitted.

14. A universal mobile radio digital network as claimed in claim 13, characterised in that the length of the intermediate storage time is selected to be such that a waiting time occurs within which it is possible to differentiate between speech on the one hand and clicking noises on the other hand.

15. A universal mobile radio digital network as claimed in claim 8, characterised in that the transit time of the speech through the relevant radio concentrator ($FUKO_A$ and $FUKO_B$) and/or through an exchange is in each case equal.

16. A universal mobile radio digital network as claimed in one of the preceding claims, characterised in that for an information section having an above-average number of octets in the target code sequence (Z) an item of priority information is provided on the basis of which an information section characterised in this way or a phrase (P) is given preferred consideration in the current establishment of a real connection.

17. A universal mobile radio digital network as claimed in claim 8, characterised in that in the event that a phrase (P) in the direction of a mobile subscriber has ended, the mobile subscriber station or the relevant radio concentrator (e. g. $FUKO_A$) transmits 16 octets of the form 11111111 and then releases the speech channel which has been used.

18. A universal mobile radio digital network as claimed in claim 6, characterised in that the establishment data sequences (D', D'') are safeguarded by a safeguarding bit, for example a parity bit.

19. A universal mobile radio digital network as claimed in claim 8, characterised in that in the event that no real channel can be made promptly available for an information section which is to be transmitted from a mobile terminal to a wired terminal or the wired terminal has failed to hear the request for a channel or the request has been subject to interference from other mobile terminals, following the expiration of an intermediate storage time of 15 ms the mobile terminal again requests a channel, although the transmission of the request is further delayed by the time requirement for the transmission of 0, 1, 2 or 3 octets and the actual delay of the transmission is stochastically determined.

20. A universal mobile radio digital network as claimed in claim 8, characterised in that in the event that the receiver of the mobile station is connected to the speech channel whereas the relevant radio concentrator (e. g. $FUKO_A$) is to assign this channel to the mobile station, the radio concentrator ($FUKO_A$) interrupts the speech channel for a time of 10 ms and transmits 16 octets in the form 11111111, 2 octets for the rest state code, the relevant connection number and the relevant speech channel number.

21. A universal mobile radio digital network as claimed in claim 20, characterised in that in the event that the relevant current phrase (P) has now ended, this phrase (P) is terminated by 16 octets in the form 11111111.

22. A universal mobile radio digital network as claimed in claim 1, 2 or 3, characterised in that for the monitoring of the virtual connection ($VV_A$, $VV_B$, $VV_T$) at the beginning of a relevant new information section in the relevant exchange a timer is set into its »zero« state, and that the virtual connection is automatically cleared when the timer reaches a predetermined limit value.

23. A universal mobile radio digital network as claimed in claim 8, characterised in that a service characteristic which serves to distinguish the phrase (P) from an HDLC-frame is attached to the start of a phrase (P).

## Revendications

1. Système numérique de radio mobile universel pour la transmission d'informations à commutation de paquets, dans lequel chaque abonné mobile peut être relié respectivement par l'intermédiaire d'au moins une liaison hertzienne à un concentrateur hertzien fixe, et dans lequel le déclenchement de l'établissement d'une liaison, qui est introduit par un appareil terminal mobile de départ (A) dans le réseau numérique de radio mobile universel (UMD) est utilisé pour établir une liaison de départ virtuelle ($VV_A$) entre l'appareil terminal mobile de départ (A) et le concentrateur hertzien ($FUKO_A$) qui lui est actuellement affecté, et dans lequel une information de sélection (W) introduite par l'appareil terminal mobile de départ (A) dans le réseau numérique de radio mobile universel (UMD) est utilisée pour établir des liaisons partielles virtuelles ($VV_T$) et une liaison virtuelle de destination ($VV_B$) entre un appareil terminal mobile de destination (B) et un autre ou éventuellement également le même concentrateur ($FUKO_A$ ou $FUKO_B$) qui lui est affecté actuellement, et dans lequel l'information devant être transmise est subdivisée en des sections d'informations possédant des longueurs variables non limitées par le procédé de transmission ni par le procédé de commutation, caractérisé par le fait qu'une section d'informations est transmise d'une façon correcte dans le temps sous la forme d'un bloc comportant une suite (Z) formant indicatif de destination, qui est disposée en tête et qui contient des indications concernant des liaisons partielles virtuelles ($VV_T$) devant être éventuellement acheminées, et la liaison virtuelle de départ ($VV_A$) devant être acheminée et ou la liaison virtuelle de destination ($VV_B$) devant être acheminée, en fonction du sens de transmission de l'information, et comportant un indicatif de fin (E) positionné à la fin de la section d'informations et signalant la fin de cette section, par l'intermédiaire des liaisons réelles (VR) établies par sections respectivement entre l'appareil terminal mobile de départ (T) et l'appareil terminal mobile de destination (B) pour un bloc actuel considéré, que les deux sens de transmission de la liaison de départ et de la liaison de destination sont commandés respectivement à partir des concentrateurs hertziens, que les sections d'informations sont adaptées à une trame temporelle prédéterminée pouvant être subdivisée en éléments de trame, que des éléments respectifs complets de trame d'une section d'informations actuelle sont supprimés lorsqu'aucune liaison hertzienne et/ou aucune ligne n'est disponible en temps opportun et qu'à partir de l'instant auquel une liaison hertzienne et/ou une ligne est disponible le reste de la section d'informations est transmis de façon correcte dans le temps au début d'un nouvel élément de trame, que toutes les liaisons réelles considérées sont supprimées à la fin de la section d'informations et que toutes les liaisons virtuelles considérées (VV$_A$) sont supprimées à la fin de la transmission d'informations.

2. Réseau numérique de radio mobile universel suivant la revendication 1, caractérisé par le fait que la trame temporelle est constituée par les éléments de trame d'une durée de 8 ms.

3. Réseau numérique de radio mobile universel pour la transmission d'informations à commutation de paquets, dans lequel chaque abonné mobile peut être relié respectivement par l'intermédiaire d'au moins une liaison hertzienne à un concentrateur hertzien fixe, dans lequel le déclenchement de l'établissement d'une liaison, qui est introduit par un appareil terminal mobile de départ (A) dans le réseau numérique de radio mobile universel (UMD) est utilisé pour établir une liaison de départ virtuelle (VV$_A$) entre l'appareil terminal mobile de départ (A) et le concentrateur hertzien (FUKO$_A$) qui lui est actuellement affecté, et dans lequel une information de sélection (W) introduite par l'appareil terminal mobile de départ (A) dans le réseau numérique de radio mobile universel (UMD) est utilisée pour établir des liaisons partielles virtuelles (VV$_T$) et une liaison virtuelle de destination (VV$_B$) entre un appareil terminal mobile de destination (B) et un autre ou éventuellement également le même concentrateur (FUKO$_A$ ou FUKO$_B$) qui lui est affecté actuellement, et dans lequel l'information devant être transmise est subdivisée en des sections d'informations possédant des longueurs variables non limitées par le procédé de transmission et par le procédé de commutation, caractérisé par le fait qu'un segment d'informations est transmis d'une façon correcte dans le temps sous la forme d'un bloc comportant une suite (Z) formant indicatif de destination, qui est disposée en tête et qui contient des indications concernant des liaisons partielles virtuelles (VV$_T$) devant être éventuellement acheminées, et la liaison virtuelle de départ (VV$_A$) devant être acheminée et/ou la liaison virtuelle de destination (VV$_B$) devant être acheminée, en fonction du sens de transmission de l'information, et comportant un indicatif de fin (E) positionné à la fin de la section d'informations et signalant la fin de cette section, par l'intermédiaire des liaisons réelles (VR) établies par sections respectivement entre l'appareil terminal mobile de départ (T) et l'appareil terminal mobile de destination (B) pour un bloc actuel considéré, que les deux sens de transmission de la liaison de départ et de la liaison de destination sont commandés respectivement à partir des concentrateurs hertziens, que respectivement 16 octets d'une section d'informations actuelle ne pouvant pas être transmise immédiatement, sont mémorisés temporairement, que dès qu'une liaison hertzienne réelle et/ou une ligne est disponible, ces 16 octets sont transmis et qu'à la suite de la transmission des 16 octets, qui ont été mémorisés préalablement, le reste actuel de la section d'information est ajouté et est transmis d'une manière correcte dans le temps conformément à la trame temporelle, que toutes les liaisons réelles concernées sont supprimées à la fin de la section d'informations et que toutes les liaisons virtuelles concernées (VV$_A$) sont supprimées à la fin de la transmission d'informations.

4. Réseau numérique de radio mobile universel suivant la revendication 1, 2 ou 3, caractérisé par le fait qu'un appareil terminal fixe participe à l'établissement d'une liaison, respectivement à la place de l'appareil terminal mobile de départ (A) ou de l'appareil terminal mobile de destination (B).

5. Réseau numérique de radio mobile universel suivant la revendication 1, 2 ou 3, caractérisé par le fait que les liaisons partielles virtuelles (VV$_T$) sont transmises par l'intermédiaire de centraux de transit fixes (VSt$_{D1}$ ... VSt$_{Dn}$).

6. Réseau numérique de radio mobile universel suivant la revendications précédentes, caractérisé par le fait que pour l'établissement de la liaison virtuelle (VV$_A$ et/ou VV$_B$, éventuellement VV$_T$), il se produit tout d'abord, sur la base d'un indicatif affecté de façon permanente à l'appareil terminal mobile de départ (A), et sur la base d'une information de sélection (W), à savoir un indicatif (KVSt$_B$) de central de destination, déterminant le concentrateur hertzien (FUKO$_A$), qui est affecte actuellement à l'appareil terminal mobile de départ (A), et/ou le concentrateur hertzien, qui est éventuellement le même concentrateur (FUKO$_B$ ou FUKO$_A$), qui est affecté actuellement à l'appareil terminal mobile de destination (B), ou un central fixe de destination (VSt$_B$), une recherche de voies d'acheminement, lors de laquelle il se produit une sélection de faisceaux de liaisons hertziennes et/ou de faisceaux de lignes, par l'intermédiaire desquels le point de départ de la liaison devant être établie peut être relié au point de destination et dans lesquels il existe une capacité libre de transmission d'informations à l'instant du début de la recherche des voies d'acheminement, que le concentrateur hertzien (FUKO$_A$), qui est affecté actuellement à l'appareil terminal mobile de départ (A), où un central de départ (VSt$_A$) envoie, par l'intermédiaire d'une ligne libre du faisceau de lignes sélectionné, qui aboutit à un central de transit (VSt$_{D1}$) ou au central de destination (VSt$_B$) ou au concentrateur hertzien (FUKO$_B$) affecté actuellement à l'appareil terminal mobile de destination (B), une suite (D') de données d'établissement de liaison au central de transit (VSt$_{D1}$) ou au central de destination (VSt$_B$)

ou au concentrateur hertzien (FUKO$_B$) affecté seulement à l'appareil terminal mobile de destination (B), la suite (D') de données d'établissement de liaison contenant l'information de sélection (W) sous la forme d'un indicatif (KVSt$_B$) du central de destination et d'un indicatif (KB) de l'appareil terminal de destination, une information d'identification (I) sous la forme de l'indicatif (KVSt$_A$) du central de destination et d'un indicatif (KA) de l'appareil terminal de départ et un indicatif (A-D$_1$) de faisceau de lignes, concernant le groupe de canaux sélectionné ou le faisceau de lignes sélectionné, que dans le cas où le faisceau de lignes sélectionné aboutit au central de transit (VSt$_{D1}$), ce dernier exécute sur la base de l'indicatif (KVSt$_B$) du central de destination présent dans l'information de sélection (W) une recherche de voies d'acheminement lors de laquelle se trouve sélectionné un autre faisceau de lignes, au moyen duquel le premier central de transit (VST$_{D1}$) peut être relié indirectement par l'intermédiaire d'un autre central de transit (VST$_{D2}$) au central de destination (VST$_B$) ou bien est relié directement à ce central et dans lequel il existe une capacité libre de transmission d'informations à l'instant du début de cette recherche de voies d'acheminement, que le premier central de transit (VST$_{D1}$) envoie par l'intermédiaire d'une ligne libre du faisceau de lignes sélectionné, qui aboutit à l'autre central de transit (VST$_{D2}$) ou au central de destination (VST$_B$), une autre suite (D'') de données d'établissement de liaison au second central de transit (VST$_{D2}$) ou au central de destination (VST$_B$), l'autre suite (D'') de données d'établissement de liaison contenant l'information de sélection (W) sous la forme d'un indicatif (KVST$_B$) du central de destination et de l'indicatif (KB) de l'appareil terminal de destination, l'indicatif d'identification (I) sous la forme de l'indicatif (KVST$_A$) du central de départ et de l'indicatif (KA) de l'appareil terminal de départ, le premier indicatif de faisceau de lignes (A—D$_1$) et un autre indicatif de faisceau de lignes (D$_1$—D$_2$ ou D$_1$—B), que lors de la traversée d'un autre central de transit (VST$_{D3}$ ... VST$_{Dn}$) une autre recherche de voies d'acheminement est exécutée et respectivement l'indicatif de faisceau de lignes concernant le faisceau de lignes sélectionné, est ajouté à la suite déjà existante de données d'établissement de liaison, que le central de destination (VST$_B$) ou le concentrateur hertzien (FUKO$_B$), qui est affecté actuellement à l'appareil terminal mobile de destination (B), mémorise la suite (par exemple D'') de données d'établissement de liaison, qui est dirigée vers ce central ou vers ce concentrateur de destination et qui est envoyée par le central de transit (par exemple VST$_{D2}$) qui est situé en amont dudit central ou dudit concentrateur dans la voie d'acheminement de la liaison ou directement par le central de départ (VST$_A$) ou par le concentrateur hertzien (FUKO$_A$) actuellement affecté à l'appareil terminal mobile de départ (A), et renvoie un télégramme d'accusé de réception, contenant l'ensemble de l'information de la suite (par exemple D'') d'établissement de liaison, apparue juste au moment où le central de destination ou bien le concentrateur hertzien (FUKO$_B$) actuellement affecté à l'appareil terminal mobile de destination (B), est atteint, au central de départ (VST$_A$) ou au concentrateur hertzien (FUKO$_A$) actuellement affecté à l'appareil terminal mobile de départ (A) et dans lequel cette information est également mémorisée, et que les liaisons partielles réelles sont respectivement interrompues après que la suite respectivement émise de données d'établissement de liaison ou le télégramme d'accusé de réception ait été mémorisé préalablement dans le central de transit concerné (VST$_{D1}$, VST$_{D2}$).

7. Réseau numérique de radio mobile universel suivant l'une des revendications précédentes, caractérisé par le fait que l'information devant être transmise est constituée par des données en temps réel et qu'aussi bien l'appareil terminal de départ (A) que l'appareil terminal de destination (B) sont constitués par exemple par un dispositif effectuant une mesure ou un calculateur de processus.

8. Réseau numérique de radio mobile universel suivant l'une des revendications 1 à 5, caractérisé par la fait que l'information devant être transmise est une information de conversation (S) mise sous forme numérique, que les sections d'informations sont des phrases (P), c'est-à-dire des éléments de conversation, et que l'appareil terminal de départ (A) ou l'appareil terminal de destination (B) est un poste téléphonique.

9. Réseau numérique de radio mobile universel suivant la revendication 1, caractérisé par le fait que la transmission d'informations à un appareil terminal mobile à partir du concentrateur hertzien respectif (FUKO$_A$ ou FUKO$_B$) est exécuté par l'intermédiaire d'un canal particulier, qui n'est pas identique à un canal d'organisation prévu pour réaliser l'établissement de la liaison ou dans des buts d'organisation pour le réseau numérique de radio mobile universel (UMD).

10. Réseau numérique de radio mobile universel suivant la revendication 9, caractérisé par le fait que lors de l'établissement d'une liaison, le concentrateur hertzien respectif (FUKO$_A$ ou FUKO$_B$) associe par l'intermédiaire du canal d'organisation, à la liaison concernée un numéro qui n'est valable que pendant la durée de la liaison et que pour cette liaison et pour le concentrateur hertzien concerné (FUKO$_A$ ou FUKO$_B$).

11. Réseau numérique de radio mobile universel suivant la revendication 10, caractérisé par le fait que tous les canaux du concentrateur hertzien (FUKO$_A$ ou FUKO$_B$) sont numérotés et que l'on désigne avec un bit déterminé d'un numéro de canal, la direction dans laquelle le canal concerné fonctionne.

12. Réseau numérique de radio mobile universel suivant la revendication 1, caractérisé par le fait qu'il est prévu respectivement, du côté émission, un détecteur de parole associé, de façon permanente ou en cas de besoin, à la liaison concernée, en un emplacement approprié, et qui est à même d'identifier des pauses de conversation et de former alors les phrases (P).

13. Réseau numérique de radio mobile universel suivant la revendication 12, caractérisé par le fait que le signal de parole codé constituant une phrase (P) est mémorisé temporairement, du côté effectuant respectivement l'émission, pendant un intervalle de temps prédéterminé de mémorisation temporaire de par exemple 15 ms, pendant lequel la suite (Z) constituant l'indicatif de destination et devant être placé en tête de la phrase (P) devant être émise, est formée et émise.

14. Réseau numérique de radio mobile universel suivant la revendication 13, caractérisé par le fait que la durée de mémorisation intermédiaire est choisie suffisamment importante pour qu'il apparaisse un temps mort pendant lequel il existe une possibilité de différenciation entre la conversation d'une part et des bruits de grésillements d'autre part.

15. Réseau numérique de radio mobile universel suivant la revendication 8, caractérisé par le fait que le temps de transit de la parole dans le concentrateur hertzien respectivement considéré (FUKO$_A$ ou FUKO$_B$) et/ou dans un central, est le même dans tous les cas.

16. Réseau numérique de radio mobile universel suivant l'une des revendications précédentes, caractérisé par le fait que pour une section d'informations comportant un nombre, supérieur à la moyenne, d'octets, il est prévu dans la suite (Z) formant indicatif de destination, une indication de priorité sur la base de laquelle une section d'informations caractérisée de cette manière ou une phrase (P) est prise en compte de façon préférentielle lors de l'établissement actuel d'une liaison réelle.

17. Réseau numérique de radio mobile universel suivant la revendication 8, caractérisé par le fait que dans le cas où une phrase (P) envoyée en direction d'un abonné mobile se termine, le poste d'abonné mobile ou le concentrateur hertzien concerné (par exemple FUKO$_A$) envoie 16 octets la forme 11111111 et libère ensuite le canal téléphonique utilisé.

18. Réseau numérique de radio mobile universel suivant la revendication 6, caractérisé par le fait que les suites (D', D'') de données d'établissement de liaisons sont protégées par un bit de sécurité, par exemple par un bit de parité.

19. Réseau numérique de radio mobile universel suivant la revendication 8, caractérisé par le fait que dans le cas où aucun canal réel ne peut être disponible en temps opportun pour une section d'informations devant être transmise par un appareil terminal mobile à un appareil terminal câblé, ou bien dans le cas où l'appareil terminal câblé n'a pas entendu la demande d'un canal ou que la demande a été perturbée par des demandes d'autres appareils terminaux mobiles, l'appareil terminal mobile demande à nouveau un canal après l'écoulement d'une durée de mémorisation intermédiaire de 15 ms, mais retarde encore en supplément l'émission de la demande, d'un intervalle de temps nécessaire pour la transmission de 0, 1, 2 ou 3 octets, et que le retard respectif de l'émission est déterminée de façon aléatoire.

20. Réseau numérique de radio mobile universel suivant la revendication 8, caractérisé par le fait que dans le cas où le récepteur du poste mobile est raccordé au canal téléphonique, alors que le concentrateur hertzien concerné (par exemple FUKO$_A$) devrait affecter ce canal au poste mobile, le concentrateur hertzien (FUKO$_A$) interrompt le canal téléphonique pendant un intervalle de temps de 10 ms et émet 16 octets ayant la forme 11111111, deux octets pour l'identification de l'état de repos ainsi que le numéro concerné de la liaison et le numéro concerné du canal téléphonique.

21. Réseau numérique de radio mobile universel suivant la revendication 20, caractérisé par le fait que dans le cas où la phrase actuelle considérée (P) s'est terminée entre-temps, cette phrase (P) est terminée avec 16 octets ayant la forme 11111111.

22. Réseau numérique de radio mobile universel suivant la revendication 1, 2 ou 3, caractérisé par le fait que pour le contrôle de la liaison réelle (VV$_a$, VV$_B$, VV$_T$), une minuterie est placée dans son état »ZERO« respectivement au début d'une nouvelle section d'informations considéré dans le central concerné, et que la liaison virtuelle est interrompue de façon automatique lorsque la minuterie atteint une valeur limite prédéterminée.

23. Réseau numérique de radio mobile universel suivant la revendication 8, caractérisé par le fait qu'un signal caractéristique de service est disposé au début d'une phrase (P) afin d'établir une distinction entre la phrase (P) et une trame HDLC.

# FIG 1

# FIG 2

# FIG 3

# FIG 4

# FIG 5